# EUROPÄISCHE PATENTANMELDUNG

(11) **EP 1 424 466 A2**
(43) Veröffentlichungstag der Anmeldung: **02.06.2004**
(21) Anmeldenummer: 03104165.0
(22) Anmeldetag: 12.11.2003
(51) Int. Cl.: F01D 5/14

(54) **Verfahren zum Herstellen einer Turbinenschaufel**

(30) Priorität: 28.11.2002 DE 10255346
(71) Anmelder: Alstom Technology Ltd, 5400 Baden (CH)
(72) Erfinder: Irmisch, Stefan Dr.,, 5417, Untersiggenthal (CH); Kreis, Erhard, 8112, Otelfingen (CH); Nagler, Christoph, 8032, Zürich (CH); Schwind, Andre, 09474, Crottendorf (DE)

(57) **Zusammenfassung**

Bei einem Verfahren zum Herstellen einer Turbinenschaufel wird in einer Giessform ein die grundsätzliche Form der Turbinenschaufel aufweisendes Gussstück (10') hergestellt und das Gussstück (10') zur Fertigstellung der Turbinenschaufel anschliessend materialabhebend bearbeitet.

Bei einem solchen Verfahren wird auf besonders einfache und schnelle Weise eine Änderung der Anströmgeometrie der Schaufel zur Optimierung der Turbineneigenschaften dadurch ermöglicht, dass der veränderte Anströmwinkel bei gleichbleibender Giessform durch eine geänderte Bearbeitung des Gussstücks (10') erreicht wird.

## Beschreibung

### TECHNISCHES GEBIET

Die vorliegende Erfindung bezieht sich auf das Gebiet der Turbinen. Sie betrifft ein Verfahren zum Herstellen einer Turbinenschaufel gemäss dem Oberbegriff des Anspruchs 1.

### STAND DER TECHNIK

Bei der Entwicklung einer Turbinenstufe kann es manchmal schwierig sein, die vorausberechnete Leistung mit den Effektivitätszielen in Übereinstimmung zu bringen. Diese Schwierigkeiten entstehen während des Giessens und während des Bearbeitungsprozesses der Turbinenschaufeln, weil sich dort zahlreiche Abweichungen aufsummieren und zu einer gewissen Diskrepanz führen. Sowohl hinsichtlich der Entwicklung als auch hinsichtlich der Herstellung ergibt sich bei der fertigen Maschine eine Differenz zwischen den Benchmarkberechnungen und der Turbine in der Realität. Je nach der Grösse der Differenz können möglicherweise spätere Korrekturen notwendig werden. Es ist daher wünschenswert, diese Differenz zu verkleinern, um die vorausberechneten strömungstechnischen Zielwerte der Turbine auch tatsächlich zu erreichen.

Ein grundsätzlicher Weg zur Lösung dieses Problems basiert auf der Möglichkeit, den Strömungsweg der Gase in der Turbinenstufe dadurch einzustellen, dass das Schaufelprofil der Turbinenschaufel (um die Längsachse) in die gewünschte Position gedreht wird.

Ein Weg dazu ist der Einsatz einer verstellbaren Giessform. So ist in der EP-A2-1 216 770 sind ein Werkzeug und ein Verfahren zum Giessen eines Formteils aus Wachs für die Herstellung einer Turbinenschaufel offenbart, bei dem mehrere Werkzeugblöcke in einer vorgegebenen Weise formschlüssig zusammengesetzt werden und einen Hohlraum für das zu giessende Formteil bilden. Zumindest einer der Werkzeugblöcke nimmt einen dreh- oder verschiebbaren Einschub oder Einsatz auf, der mit einer Fläche an den Hohlraum angrenzt und in unterschiedlichen Positionen oder Orientierungen gegenüber dem Werkzeugblock fixierbar ist.

Das bekannte Giesswerkzeug ermöglicht eine nachträgliche Änderung der Geometrie des Formteils und insbesondere von dessen Anstellwinkel bzw. der Anströmgeometrie, ohne dafür neue Werkzeugblöcke fertigen zu müssen. Nachteilig ist dabei jedoch, dass alle Änderungen beim Guss einen erheblichen Arbeits- und Zeitaufwand verursachen.

### DARSTELLUNG DER ERFINDUNG

Es ist daher Aufgabe der Erfindung, ein Verfahren zum Herstellen einer Turbinenschaufel zu schaffen, welches die aufgezeigten Nachteile bekannter Verfahren vermeidet und auf besonders einfache und schnelle Weise eine Änderung der Anströmgeometrie der Schaufel zur Optimierung der Turbineneigenschaften ermöglicht.

Die Aufgabe wird durch die Gesamtheit der Merkmale des Anspruchs 1 gelöst. Kern der Erfindung ist es, einen zur Optimierung der Turbine veränderten Anströmwinkel der Turbinenschaufel bei gleichbleibender Giessform durch eine geänderte Bearbeitung des Gussstücks zu erreichen. Diese Lösung trägt der Erkenntnis Rechnung, dass Änderungen nach abgeschlossener Entwicklung der Schaufel zwar generell entweder ganz vermieden oder so früh wie möglich durchgeführt werden sollten, dass es aber gleichwohl umso besser ist, je später in der Herstellungskette derartige Änderungen stattfinden. Irgendwelche Änderungen bei der maschinellen Bearbeitung beeinflussen lediglich die Bearbeitungswerkzeuge. Dadurch wird die zeitliche Verzögerung im Vergleich zu einer Änderung beim Guss deutlich reduziert. Eine Änderung des Anströmwinkels der Turbinenschaufel wird dabei dadurch erreicht, dass das Gussstück zur Bearbeitung um einen Korrekturwinkel um die Schaufellängsachse gedreht wird.

Eine erste bevorzugte Ausgestaltung der Erfindung ist dadurch gekennzeichnet, dass das Gussstück bei der Bearbeitung in einer Aufnahme gehalten wird, dass das Gussstück zur geänderten Bearbeitung in der Aufnahme gedreht wird, wobei die für die Bearbeitung notwendigen Bezugspunkte neu positioniert werden.

Alternativ dazu ist es möglich, dass das Gussstück zur geänderten Bearbeitung zusammen mit der Aufnahme gedreht wird, wobei zum Erreichen der gewünschten Position die korrekt errechneten Abstände verwendet werden.

Eine besonders bevorzugte Ausgestaltung der Erfindung zeichnet sich dadurch aus, dass an dem Gussstück für die materialabhebende Bearbeitung eine zusätzliche Materialstärke vorgesehen ist, und dass die Dicke der zusätzlichen Materialstärke über einen Minimalwert hinausgehend so gross gewählt ist, dass aus dem gleichen Gussstück durch die Bearbeitung eine Turbinenschaufel erzeugt werden kann, welche innerhalb eines vorgegebenen Winkelbereichs einen frei wählbaren Anströmwinkel aufweist.

Besonders günstig ist es dabei, wenn das Gussstück bzw. die Turbinenschaufel eine Schaufelplattform und ein Schaufelblatt aufweist, und wenn die über den Minimalwert hinausgehende zusätzliche Materialstärke an der Schaufelplattform vorgesehen ist.

Bevorzugt beträgt der Minimalwert der zusätzlichen Materialstärke etwa 2 mm beträgt, und die über den Minimalwert hinausgehende zusätzliche Materialstärke insgesamt etwa 5 mm.

### KURZE ERLÄUTERUNG DER FIGUREN

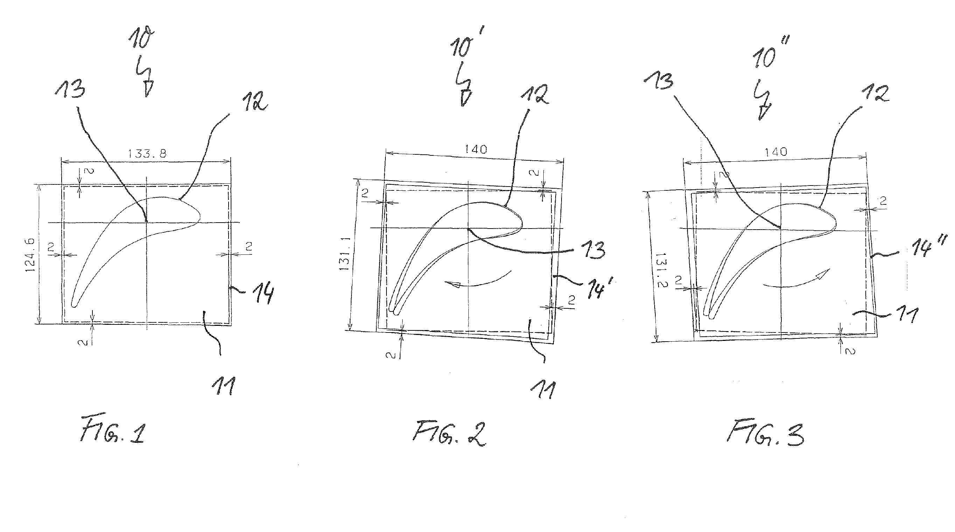

Die Erfindung soll nachfolgend anhand von Ausführungsbeispielen im Zusammenhang mit der Zeichnung näher erläutert werden. Es zeigen
- Fig. 1: in der Draufsicht von oben ein Gussstück für eine Turbinenschaufel mit einer Schaufelplattform und einem Schaufelblatt nach dem Stand der Technik, wobei an der Schaufelplattform eine zusätzliche Materialstärke von 2 mm für die mechanische Bearbeitung vorgesehen ist;
- Fig. 2: in einer zu Fig. 1 vergleichbaren Darstellung ein erstes Ausführungsbeispiel der Erfindung, bei der das Gussstück an der Schaufelplattform eine über den Minimalwert von 2 mm hinausgehende zusätzliche Materialstärke aufweist, so dass aus demselben Gussstück auch eine um 3° im Uhrzeigersinn verdrehte Turbinenschaufel erzeugt werden kann; und
- Fig. 3: in einer zu Fig. 1 vergleichbaren Darstellung ein zweites Ausführungsbeispiel der Erfindung, bei der das Gussstück an der Schaufelplattform eine über den Minimalwert von 2 mm hinausgehende zusätzliche Materialstärke aufweist, so dass aus demselben Gussstück auch eine um 3° entgegen dem Uhrzeigersinn verdrehte Turbinenschaufel erzeugt werden kann.

### WEGE ZUR AUSFÜHRUNG DER ERFINDUNG

In Fig. 1 ist in der Draufsicht von oben ein beispielhaftes Gussstück für eine Turbinenschaufel aus der ersten Stufe mit einer Schaufelplattform und einem Schaufelblatt nach dem Stand der Technik wiedergegeben. Das Gussstück 10 hat eine rechteckige Schaufelplattform 11 mit (beispielhaften) Aussenabmessungen von 124,6 mm x 133,8 mm. Von der Schaufelplattform 11 nach oben ausgehend erstreckt sich entlang einer Längsachse 13 das eigentliche Schaufelblatt 12, dessen Lage relativ zur Schaufelplattform 11 den späteren Anströmwinkel der Turbinenschaufel bestimmt (siehe auch die Fig. 2 der eingangs genannten EP-A2-1 216 770). An den äusseren Rändern der Schaufelplattform 11 ist in an sich bekannter Weise umlaufend eine zusätzliche Materialstärke ("machining stock") 14 von 2 mm vorgesehen (Bereich zwischen dem gestrichelt und dem durchgehend eingezeichneten Rechteck in Fig. 1). Diese zusätzliche Materialstärke 14 stellt Material für die nachfolgende materialabhebende Bearbeitung des Gussstückes 10 zur Verfügung, bei der die Turbinenschaufel ihre endgültige Form erhält.

Die zentrale Idee der Erfindung besteht nun darin, das Gussstück von den äusseren Abmessungen her so auszulegen, dass bei der nachfolgenden Bearbeitung der Anströmwinkel in einem gewissen Winkelbereich frei gewählt werden kann, so dass ohne Änderung der Gussform der Anströmwinkel durch die Bearbeitung an die Gegebenheiten der Turbine angepasst werden kann. Dazu ist es notwendig, die für die Bearbeitung notwendige zusätzliche Materialstärke an den entsprechenden Flächen der Schaufel über den Minimalwert (von z.B. 2 mm) hinaus so weit zu erhöhen, dass eine Bearbeitung bei verdrehter Schaufel möglich ist. Je grösser dabei der zugängliche Winkelbereich sein soll, um so grösser muss die Dicke der zusätzlichen Materialstärke gewählt werden. Die erhöhte Dicke der zusätzlichen Materialstärke muss bei der Wachsform für den Guss berücksichtigt werden und erhöht geringfügig den Bearbeitungsaufwand.

In den Fig. 2 und 3 sind zwei Beispiele für eine erhöhte Dicke der zusätzlichen Materialstärke dargestellt: Das Gussstück 10' der Fig. 2 ist so ausgelegt, dass der Anströmwinkel der späteren Turbinenschaufel um einen Winkel bis zu 3° im Uhrzeigersinn geändert werden kann (Drehpfeil in Fig. 2). Das Gussstück 10" der Fig. 3 ist so ausgelegt, dass der Anströmwinkel der späteren Turbinenschaufel um einen Winkel bis zu 3° entgegen dem Uhrzeigersinn geändert werden kann (Drehpfeil in Fig. 3).

Die Ausgangsstellung (ohne zusätzliche Drehung) ist in beiden Figuren 2 und 3 im Bereich der Schaufelplattform 11 gestrichelt eingezeichnet. Das gestrichelte Rechteck geht durch die 3°-Drehung in das kleinere der beiden durchgezogen eingezeichneten Rechtecke über. Das Schaufelblatt 12 dreht sich entsprechend mit. Soll nun das verdrehte Schaufelblatt 12 auf die unverdrehte (gestrichelte) Schaufelplattform 11 bezogen werden (dies würde einer Verdrehung des Anströmwinkel entsprechen), müssen die äusseren Grenzen der Schaufelplattform 11 entsprechend dem äusseren der beiden durchgezogenen Rechtecke soweit nach aussen verschoben werden, dass zu dem gestrichelt eingezeichneten Rechteck der nach der Bearbeitung bestehenden Schaufelplattform ein Mindestabstand von 2 mm als zusätzlicher Materialstärke bleibt. Die Schaufelplattform 11 des Gussstückes 10' hat dann die Aussenabmessungen von 131,1 mm x 140 mm (zusätzliche Materialstärke 14'; Fig. 2), die Schaufelplattform 11 des Gussstückes 10" hat dann die Aussenabmessungen 131,2 mm x 140 mm (zusätzliche Materialstärke 14"; Fig. 3). Wird von dem grösseren der beiden durchgehend gezeichneten Rechtecke ausgegangen, kann durch Materialabtrag an den Gussstücken 10' bzw. 10" bis auf das gestrichelt eingezeichnete Rechteck eine um -3° bzw. +3° verdrehte Turbinenschaufel herausgearbeitet werden.

Zur Bearbeitung kann das Gussstück 10' bzw. 10" auf zwei unterschiedliche Weisen in der Aufnahme der Bearbeitungsmaschine positioniert werden: Im einen Fall wird das Gussstück in der Aufnahme gedreht, wobei die für die Bearbeitung notwendigen Bezugspunkte neu positioniert werden. Im anderen Fall wird das Gussstück zusammen mit der Aufnahme gedreht, wobei zum Erreichen der gewünschten Position die korrekt errechneten Abstände verwendet werden.

Die erfindungsgemässe Möglichkeit zur Verdrehung der Turbinenschaufel nach dem Guss wird vor allem zur Anpassung der Leitbeschaufelung der ersten Stufe eingesetzt, um die gesetzten Ziele bei der Verbesserung der Turbine zu erreichen.

Dabei werden die Schaufeln um maximal +/- 2° verdreht. Dazu ist eine zusätzliche Materialstärke von etwa 5 mm verglichen mit der üblichen Materialstärke von etwa 2 mm notwendig. Dabei wird für die Bearbeitung die Drehung des Gussstückes zusammen mit der Aufnahme bevorzugt.

### BEZUGSZEICHENLISTE

- 10,10',10": Gussstück
- 11: Schaufelplattform
- 12: Schaufelblatt
- 13: Längsachse
- 14,14',14": zusätzliche Materialstärke ("machining stock")

## Patentansprüche

1. Verfahren zum Herstellen einer Turbinenschaufel, bei welchem Verfahren in einer Giessform ein die grundsätzliche Form der Turbinenschaufel aufweisendes Gussstück (10, 10', 10") hergestellt und das Gussstück (10, 10', 10") zur Fertigstellung der Turbinenschaufel anschliessend materialabhebend bearbeitet wird, **dadurch gekennzeichnet, dass** ein zur Optimierung der Turbine veränderter Anströmwinkel der Turbinenschaufel bei gleichbleibender Giessform durch eine geänderte Bearbeitung des Gussstücks (10, 10', 10") erreicht wird.

2. Verfahren nach Anspruch 1, **dadurch gekennzeichnet, dass** das Gussstück (10, 10', 10") bei der Bearbeitung in einer Aufnahme gehalten wird, dass das Gussstück (10, 10', 10") zur geänderten Bearbeitung in der Aufnahme gedreht wird, wobei die für die Bearbeitung notwendigen Bezugspunkte neu positioniert werden.

3. Verfahren nach Anspruch 1, **dadurch gekennzeichnet, dass** das Gussstück (10, 10', 10") bei der Bearbeitung in einer Aufnahme gehalten wird, dass das Gussstück (10, 10', 10") zur geänderten Bearbeitung zusammen mit der Aufnahme gedreht wird, wobei zum Erreichen der gewünschten Position die korrekt errechneten Abstände verwendet werden.

4. Verfahren nach einem der Ansprüche 1 bis 3, **dadurch gekennzeichnet, dass** an dem Gussstück (10, 10', 10") für die materialabhebende Bearbeitung eine zusätzliche Materialstärke (14, 14', 14") vorgesehen ist, und dass die Dicke der zusätzlichen Materialstärke (14, 14', 14") über einen Minimalwert hinausgehend so gross gewählt ist, dass aus dem gleichen Gussstück (10, 10', 10") durch die Bearbeitung eine Turbinenschaufel erzeugt werden kann, welche innerhalb eines vorgegebenen Winkelbereichs einen frei wählbaren Anströmwinkel aufweist.

5. Verfahren nach Anspruch 4, **dadurch gekennzeichnet, dass** das Gussstück (10, 10', 10") bzw. die Turbinenschaufel eine Schaufelplattform (11) und ein Schaufelblatt (12) aufweist, und dass die über den Minimalwert hinausgehende zusätzliche Materialstärke (14', 14") an der Schaufelplattform (11) vorgesehen ist.

6. Verfahren nach einem der Ansprüche 4 oder 5, **dadurch gekennzeichnet, dass** der Minimalwert der zusätzlichen Materialstärke etwa 2 mm beträgt, und dass die über den Minimalwert hinausgehende zusätzliche Materialstärke (14', 14") insgesamt etwa 5 mm beträgt.
